# EUROPÄISCHE PATENTANMELDUNG

(11) **EP 4 186 630 A1**
(43) Veröffentlichungstag der Anmeldung: **31.05.2023**
(21) Anmeldenummer: 21211284.1
(22) Anmeldetag: 30.11.2021
(51) Int. Cl.: B23K 9/20, B23K 101/34

(54) **BEFESTIGUNGSVERFAHREN**

(71) Anmelder: Hilti Aktiengesellschaft, 9494 Schaan (LI)
(72) Erfinder: Schulte Suedhoff, Eric, 6800 Feldkirch (AT); Popp, Uwe, 9443 Widnau (CH); Grad, Patrick, 8884 Oberterzen (CH); Wolfsgruber, Stefan, 4643 Pettenbach (AT); Dörner, Philipp, 4600 Thalheim (AT)
(74) Vertreter: Hilti Aktiengesellschaft Corporate Intellectual Property

(57) **Zusammenfassung**

Schweissvorrichtung zur Verschweissung eines Schweissbolzens entlang einer Schweissachse in einer Schweissrichtung mit einem Untergrund, umfassend ein Abschirmelement (150) mit einer in die Schweissrichtung weisenden Stirnfläche, welche die übrige Schweissvorrichtung in der Schweissrichtung überragt, wobei die Stirnfläche quer zu der Schweissrichtung einen Stirnflächendurchmesser (Ds) aufweist, weiterhin umfassend eine Haltevorrichtung (160) zum Halten des Schweissbolzens innerhalb des Abschirmelements während eines Schweissvorgangs, wobei die Haltevorrichtung eine Bolzenaufnahme mit einem Innendurchmesser (Di) aufweist, wobei der Stirnflächendurchmesser (Ds)der Stirnfläche höchstens das 3-fache des Innendurchmessers (Di) beträgt.

## Beschreibung

### Technisches Gebiet

Die Erfindung betrifft allgemein eine Vorrichtung und ein Verfahren zur Befestigung eines Bolzens an einem Untergrund sowie einen derartigen Bolzen.

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der elektrische Strom abgeschaltet und der Bolzen in das verflüssigte Material eingetaucht, während dieses Material erkaltet und fest wird. Der Bolzen ist dann stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Inertgas zu spülen.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen. Einige Parameter des Befestigungsverfahrens wie beispielsweise die Dauer und die elektrische Leistung des elektrischen Stroms sind von einem Anwender an der Vorrichtung einzustellen und an den verwendeten Bolzen anzupassen. Mittels einer Sichtprüfung beurteilt der Anwender schliesslich die Qualität der Verbindung zwischen dem Bolzen und dem Untergrund. Die Verbindungsqualität hängt damit auch von der Erfahrung und den Fähigkeiten des Anwenders ab.

In dem Fall, dass der Untergrund eine Oberflächenschicht, wie beispielsweise eine Lackierung, ein Korrosionsschutz oder eine Schmutzschicht, aufweist, wird diese Oberflächenschicht üblicherweise vorder Befestigung des Bolzens grossflächig abgeschliffen. Nach der Befestigung des Bolzens wird der abgeschliffene Bereich gereinigt und/oder mit einer neuen Lackierung oder Korrosionsschutzschicht versehen, was zeitaufwändig ist.

### Darstellung der Erfindung

Aufgabe der Erfindung ist es, eine Vorrichtung und/oder ein Verfahren zur Verfügung zu stellen, mit welchem eine Befestigung eines Bolzens an einem Untergrund vereinfacht und/oder verbessert wird.

Diese Aufgabe ist bei einer Schweissvorrichtung zur Verschweissung eines Schweissbolzens entlang einer Schweissachse in einer Schweissrichtung mit einem Untergrund gelöst, umfassend ein Abschirmelement mit einer in die Schweissrichtung weisenden Stirnfläche, welche die übrige Schweissvorrichtung in der Schweissrichtung überragt, wobei die Stirnfläche quer zu der Schweissrichtung einen Stirnflächendurchmesser aufweist, weiterhin umfassend eine Haltevorrichtung zum Halten des Schweissbolzens innerhalb des Abschirmelements während eines Schweissvorgangs, wobei die Haltevorrichtung eine Bolzenaufnahme mit einem Innendurchmesser aufweist, wobei der Stirnflächendurchmesser der Stirnfläche höchstens das 3-fache des Innendurchmessers beträgt. Die Schweissvorrichtung ist bevorzugt als Schweisspistole ausgebildet. Bevorzugt beträgt der Strinflächendurchmesser der Stirnfläche höchstens das 2-fache des Innendurchmessers, besonders bevorzugt höchstens das 1,5-fache des Innendurchmessers. Aufgrund der kleinen Abmessungen der Stirnfläche ist auch bei einem beschichteten Untergrund sichergestellt, dass die Stirnfläche auf dem zu verschweissenden Untergrundmaterial aufliegt und nicht auf der Beschichtung.

Eine bevorzugte Ausführungsform ist dadurch gekennzeichnet, dass das Abschirmelement einen Aussendurchmesser aufweist, welcher grösser als der Stirnflächendurchmesser ist.

Eine weitere bevorzugte Ausführungsform ist dadurch gekennzeichnet, dass das Abschirmelement einen Schutzgasauslass aufweist, welcher bezüglich der Schweissachse radial durch das Abschirmelement nach aussen in die Umgebung führt. Bevorzugt ist ein Abstand einer Mündung des Schutzgasauslasses zur Schweissachse grösser als der Stirnflächendurchmesser.

Eine bevorzugte Ausführungsform ist dadurch gekennzeichnet, dass die Stirnfläche die Schweissachse ringförmig umschliesst. Eine weitere bevorzugte Ausführungsform ist dadurch gekennzeichnet, dass die Stirnfläche oder ein Aussenumfang des Abschirmelements kreisförmig ist.

Die Aufgabe ist ebenfalls gelöst bei einem Verfahren zum Befestigen eines Bolzens an einem eine Oberflächenschicht aufweisenden Untergrund, mit den Schritten
- Zur-Verfügung-Stellen eines Bolzens, welcher an einer Stirnseite einen Bolzendurchmesser aufweist,
- Erzeugen einer Ausnehmung in dem Untergrund, indem die Oberflächenschicht in einem definierten Flächenbereich mit einem Flächendurchmesser entfernt, insbesondere abgetragen, wird, wobei der Flächendurchmesser grösser als der Bolzendurchmesser ist,
- Verflüssigen der Stirnseite und/oder des Untergrunds in der Ausnehmung,
- Erstarrenlassen der Stirnseite beziehungsweise des Untergrunds in der Ausnehmung,
- Kontaktieren der Stirnseite mit dem Untergrund in der Ausnehmung während des Erstarrens, und
- Anordnen eines Abschirmelements zwischen der die Ausnehmung umgebenden Oberflächenschicht und dem Bolzen während des Verflüssigens.

Bevorzugt weist das Abschirmelement eine Stirnfläche mit einem Stirnflächendurchmesser auf, welcher kleiner als der Flächendurchmesser ist. Eine weitere bevorzugte Ausführungsform ist dadurch gekennzeichnet, dass die Ausnehmung ein Sackloch ist.

### Ausführungsbeispiele

Die Erfindung wird nachstehend anhand von Ausführungsbeispielen unter Bezugnahme auf die Zeichnungen näher erläutert. Es zeigen:
- Fig. 1: schematisch eine Schweissvorrichtung und
- Fig. 2: eine Schweissvorrichtung ausschnittsweise in einer Längsschnittsansicht.

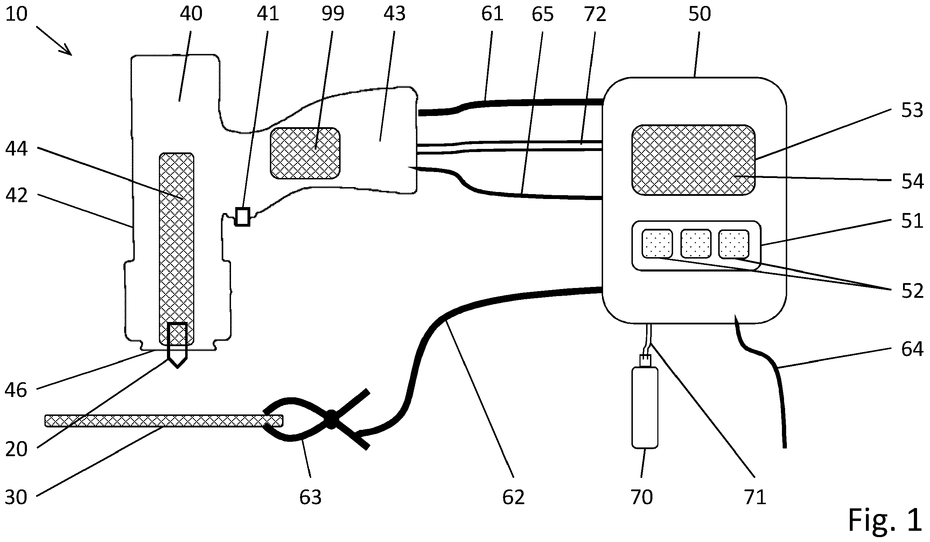

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, ein als Gasflasche ausgebildetes Gasreservoir 70, eine schlauchförmige Gasversorgungsleitung 71 und einen Gasschlauch 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Die Gasversorgungsleitung 71 und der Gasschlauch 72 dienen einer Versorgung eines Kontaktbereichs zwischen dem Schweissbolzen 20 und dem Untergrund 30 mit einem Schutzgas aus dem Gasreservoir 70, um den Kontaktbereich während eines Schweissvorgangs vor einer Oxidation durch Sauerstoff einer Umgebung zu schützen. Zur Steuerung eines Gasflusses zu dem Kontaktbereich umfasst das Gasreservoir 70, die Gasversorgungsleitung 71, das Schweissgerät 50, der Gasschlauch 72 oder die Schweisspistole 40 ein nicht gezeigtes, insbesondere regelbares Ventil auf.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

Die Schweisspistole 40 weist ein Gehäuse 42 mit einer Mündung 46 auf, von welchem ein Handgriff 43 mit dem Auslöseschalter 41 abragt. Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 99 zum Steuern der verschiedenen Komponenten und Einrichtungen der Schweisspistole und des Schweissgeräts 50 auf. Die Steuereinrichtung 99 ist zum Steuern eines oder mehrerer Parameter des Schweissvorgangs vorgesehen. Die Steuereinrichtung 99 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung auf, welche den Bolzenhalter 44 mit einer Kraft von der Mündung 46 weg nach hinten (in Fig. 1 nach oben) beaufschlagt, wenn die Bolzenabhubeinrichtung aktiviert ist. Über eine nicht gezeigte Signalleitung kommuniziert die Steuereinrichtung 99 mit der Bolzenabhubeinrichtung, um die Bolzenabhubeinrichtung zu steuern, insbesondere zu aktivieren und zu deaktivieren.

Die Schweisspistole 40 weist ferner eine als Federelement oder als ein zweiter Hubmagnet ausgebildete Bolzeneintaucheinrichtung auf, welche den Bolzenhalter 44 mit einer Kraft zu der Mündung 46 hin nach vorne (in Fig. 1 nach unten) beaufschlagt, wenn die Bolzeneintaucheinrichtung aktiviert ist. Über eine nicht gezeigte Signalleitung kommuniziert die Steuereinrichtung 99 mit der Bolzeneintaucheinrichtung, um die Bolzeneintaucheinrichtung zu steuern, insbesondere zu aktivieren und zu deaktivieren. Wenn die Bolzeneintaucheinrichtung als ein Federelement ausgebildet ist, wird dieses Federelement vorzugsweise gespannt, wenn der Bolzenhalter von der Bolzenabhubeinrichtung nach hinten bewegt wird, so dass das Federelement den Bolzenhalter nach vorne bewegt, sobald die Bolzenabhubeinrichtung deaktiviert wird.

Bei einem Schweissverfahren mit der Schweissvorrichtung 10 werden zunächst der Untergrund 30 und der Bolzen 20 zur Verfügung gestellt. In einem weiteren Schritt werden von einem Anwender über die Eingabeeinrichtung Informationen eingegeben, beispielsweise über gewünschte Parameter des folgenden Schweissvorgangs. In einem weiteren Schritt wird der Schweissbolzen 20 von dem Schweissgerät 50 mittels des ersten Kabels 61 und des zweiten Kabels 62 mit einem Schweissstrom zwischen dem Schweissbolzen 20 und dem Untergrund 30 beaufschlagt. In einem weiteren Schritt wird der Schweissbolzen 20 mittels der Bolzenabhubeinrichtung von dem Untergrund unter Beibehaltung des zwischen dem Schweissbolzen 20 und dem Untergrund 30 fliessenden Schweissstroms abgehoben, wobei sich zwischen dem Schweissbolzen 20 und dem Untergrund 30 ein Lichtbogen ausbildet. Insbesondere aufgrund der von dem Lichtbogen erzeugten Hitze wird dann ein Material des Schweissbolzens 20 und/oder des Untergrunds 30 teilweise verflüssigt. In einem weiteren Schritt wird der Schweissbolzen 20 mittels der Bolzeneintaucheinrichtung in das verflüssigte Material des Schweissbolzens 20 beziehungsweise des Untergrunds 30 eingetaucht. Danach erstarrt das verflüssigte Material des Schweissbolzens 20 beziehungsweise des Untergrunds 30, so dass der Schweissbolzen 20 stoffschlüssig mit dem Untergrund 30 verbunden ist.

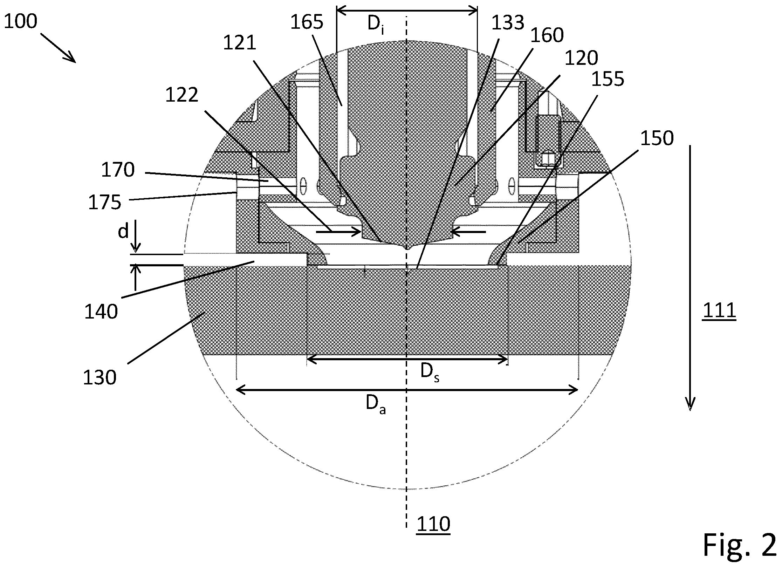

In Fig. 2 ist eine als Schweisspistole ausgebildete Schweissvorrichtung 100 zur Verschweissung eines Schweissbolzens 120 entlang einer Schweissachse 110 in einer Schweissrichtung 111 mit einem Untergrund 130 während eines Schweissvorgangs dargestellt. Der Untergrund 130 weist eine Oberflächenschicht 140 auf, welche beispielsweise eine oder mehrere Schutzschichten insbesondere gegen Korrosion, eine Oxidschicht, insbesondere Metalloxidschicht, oder eine Schmutzschicht umfasst. An einer Stirnseite 121 des Schweissbolzens 120 weist der Schweissbolzen einen Bolzendurchmesser 122 von beispielsweise 8 mm auf, wobei die Stirnseite 121 konvex ist und die Form einer flachen Kegelmantelfläche und/oder eine kreisförmige Querschnittsfläche aufweist. In einem definierten kreisförmigen Flächenbereich mit einem Flächendurchmesser weist der Untergrund 130 eine Ausnehmung 133 in Form eines Sacklochs mit einer Sacklochtiefe auf. Der Flächendurchmesser beträgt beispielsweise 20 mm und ist grösser als der Bolzendurchmesser 122.

Die Ausnehmung 133 hat zumindest in einem radial äusseren Randbereich eine konstante Tiefe, welche gleich einer Dicke d der Oberflächenschicht 140 ist. Zur Erzeugung der Ausnehmung 133 wurde die Oberflächenschicht 140 in dem definierten Flächenbereich entfernt, indem sie durch Bohren mittels eines Bohrwerkzeugs abgetragen wurde. Bei dem Bohrwerkzeug handelt es sich vorzugsweise um einen Stufenbohrer, welcher eine umlaufende Stufe aufweist, deren axialer Abstand zu einer Bohrspitze des Stufenbohrers gleich der gewünschten Sacklochtiefe ist.

Die Schweissvorrichtung 100 weist ein Abschirmelement 150 mit einer in die Schweissrichtung 111 weisenden Stirnfläche 155 auf, welche die übrige Schweissvorrichtung in der Schweissrichtung 111 überragt. Die Stirnfläche 155 ist kreisförmig ausgebildet und umschliesst die Schweissachse 110 ringförmig. Die Stirnfläche 155 weist quer zu der Schweissrichtung 111 einen Stirnflächendurchmesser Dₛ auf.

Die Schweissvorrichtung 100 weist weiterhin eine Haltevorrichtung 160 auf, welche den Schweissbolzen 120 innerhalb des Abschirmelements 150 während eines Schweissvorgangs hält. Die Haltevorrichtung 160 weist eine Bolzenaufnahme 165 mit einem Innendurchmesser Dᵢ auf. Der Stirnflächendurchmesser Dₛ der Stirnfläche 155 beträgt etwa das 1,4-fache des Innendurchmessers Dᵢ. Ein Aussendurchmesser Dₐ des Abschirmelements 150 ist dagegen grösser als der Stirnflächendurchmesser Dₛ.

Das Abschirmelement 150 weist einen Schutzgasauslass 170 auf, welcher bezüglich der Schweissachse 110 radial durch das Abschirmelement 150 nach aussen in die Umgebung führt. Ein Abstand einer Mündung 175 des Schutzgasauslasses 170 zur Schweissachse 110 ist grösser als der Stirnflächendurchmesser Dₛ. Bei einem kreisförmigen Aussenumfang des Abschirmelements 150 ist der genannte Abstand unter Umständen halb so gross wie der äussere Durchmesser des Abschirmelements 150.

Während des Schweissvorgangs, insbesondere während des Verflüssigens des Materials des Schweissbolzens 120 und des Untergrunds 130 ist das Abschirmelement 150 zwischen der die Ausnehmung umgebenden Oberflächenschicht 140 und dem Schweissbolzen 120 angeordnet. Dadurch ist die Oberflächenschicht 140 von der Schweissstelle abgeschirmt und vor Verbrennungen geschützt, welche wegen der Bildung von Verbrennungsgasen die Schweissqualität beeinträchtigen könnte. Weiterhin liegt die Stirnfläche 155 auf dem zu verschweissenden Untergrundmaterial auf und nicht auf der Oberflächenschicht 140. Dadurch ist auch bei einer ungleichmässig dicken Oberflächenschicht 140 sichergestellt, dass der Abstand des Schweissbolzens 120 zum Untergrund 130 zu Beginn des Schweissvorgangs nicht von einer Dicke der Oberflächenschicht 140 abhängt.

Die Erfindung wurde anhand von Beispielen einer Vorrichtung zur Befestigung eines ersten Gegenstandes an einem zweiten Gegenstand sowie einem Herstellungsverfahren für eine solche Vorrichtung beschrieben. Die Merkmale der beschriebenen Ausführungsformen sind dabei auch beliebig miteinander innerhalb einer einzigen Befestigungsvorrichtung beziehungsweise eines einzigen Herstellungsverfahrens kombinierbar. Es wird darauf hingewiesen, dass die erfindungsgemässe Vorrichtung und das erfindungsgemässe Verfahren auch für andere Zwecke geeignet sind.

## Patentansprüche

1. Schweissvorrichtung, insbesondere Schweisspistole, zur Verschweissung eines Schweissbolzens entlang einer Schweissachse in einer Schweissrichtung mit einem Untergrund, umfassend ein Abschirmelement mit einer in die Schweissrichtung weisenden Stirnfläche, welche die übrige Schweissvorrichtung in der Schweissrichtung überragt, wobei die Stirnfläche quer zu der Schweissrichtung einen Stirnflächendurchmesser aufweist, weiterhin umfassend eine Haltevorrichtung zum Halten des Schweissbolzens innerhalb des Abschirmelements während eines Schweissvorgangs, wobei die Haltevorrichtung eine Bolzenaufnahme mit einem Innendurchmesser aufweist, wobei der Stirnflächendurchmesser der Stirnfläche höchstens das 3-fache des Innendurchmessers beträgt.

2. Schweissvorrichtung nach Anspruch 1, wobei der Strinflächendurchmesser der Stirnfläche höchstens das 2-fache des Innendurchmessers beträgt.

3. Schweissvorrichtung nach Anspruch 2, wobei der Strinflächendurchmesser der Stirnfläche höchstens das 1,5-fache des Innendurchmessers beträgt.

4. Schweissvorrichtung nach einem der vorhergehenden Ansprüche, wobei das Abschirmelement einen Aussendurchmesser aufweist, welcher grösser als der Stirnflächendurchmesser ist.

5. Schweissvorrichtung nach einem der vorhergehenden Ansprüche, wobei das Abschirmelement einen Schutzgasauslass aufweist, welcher bezüglich der Schweissachse radial durch das Abschirmelement nach aussen in die Umgebung führt.

6. Schweissvorrichtung nach Anspruch 5, wobei ein Abstand einer Mündung des Schutzgasauslasses zur Schweissachse grösser als der Stirnflächendurchmesser ist.

7. Schweissvorrichtung nach einem der vorhergehenden Ansprüche, wobei die Stirnfläche die Schweissachse ringförmig umschliesst.

8. Schweissvorrichtung nach einem der vorhergehenden Ansprüche, wobei die Stirnfläche kreisförmig ist.

9. Schweissvorrichtung nach einem der vorhergehenden Ansprüche, wobei ein Aussenumfang des Abschirmelements kreisförmig ist.

10. Verfahren zum Befestigen eines Bolzens an einem eine Oberflächenschicht aufweisenden Untergrund, mit den Schritten
a) Zur-Verfügung-Stellen eines Bolzens, welcher an einer Stirnseite einen Bolzendurchmesser aufweist,
b) Erzeugen einer Ausnehmung in dem Untergrund, indem die Oberflächenschicht in einem definierten Flächenbereich mit einem Flächendurchmesser entfernt, insbesondere abgetragen, wird, wobei der Flächendurchmesser grösser als der Bolzendurchmesser ist,
c) Verflüssigen der Stirnseite und/oder des Untergrunds in der Ausnehmung,
d) Erstarrenlassen der Stirnseite beziehungsweise des Untergrunds in der Ausnehmung,
e) Kontaktieren der Stirnseite mit dem Untergrund in der Ausnehmung während des Erstarrens, und
f) Anordnen eines Abschirmelements zwischen der die Ausnehmung umgebenden Oberflächenschicht und dem Bolzen während des Verflüssigens.

11. Verfahren nach Anspruch 10, bei dem das Abschirmelement eine Stirnfläche mit einem Stirnflächendurchmesser aufweist, welcher kleiner als der Flächendurchmesser ist.

12. Verfahren nach einem der Ansprüche 10 bis 11, bei dem die Ausnehmung ein Sackloch ist.
